# EUROPEAN PATENT APPLICATION

(11) **EP 3 782 724 A1**
(43) Date of publication of application: **24.02.2021**
(21) Application number: 19192718.5
(22) Date of filing: 20.08.2019
(51) Int. Cl.: B01J 13/18, B29C 73/16, B29C 73/22, C08L 61/24, C08L 61/28

(54) **ENCAPSULATION OF REACTIVE MATERIALS**

(71) Applicant: Papierfabrik August Koehler SE, 77704 Oberkirch (DE)
(72) Inventor: KIND, Christian, 77704 Oberkirch (DE); MEIER, Claudia, 77704 Oberkirch (DE)
(74) Representative: Weal, Emily Teresa

(57) **Abstract**

Microcapsules comprising a core material and a wall that encloses the core material, are provided, wherein the core material comprises a hydrophobic material and the walls comprise an aminoplast polymer. The microcapsules have an average diameter between 30 and 60 µm and comprise at least 85% by weight of core material. The microcapsules may advantageously break under low activation pressures and may advantageously encapsulate high loadings of reactive materials. Methods of making the microcapsules and compositions comprising the microcapsules and a matrix are also described.

## Description

### Field of the Invention

The present disclosure relates to microcapsules encapsulating high loadings of liquid hydrophobic materials, in particular reactive materials. The present disclosure relates in particular to aminoplast resin microcapsules such as melamine-formaldehyde microcapsules, to compositions comprising the microcapsules, and to methods of making the microcapsules. In particular, the microcapsules may be pressure-activated with low activation pressure.

### Background

Ingredients such as fragrances, flavourings, pigments, insecticides, disinfectants, pharmaceuticals etc. are frequently provided in compositions in the form of microcapsules comprising a solid shell (also referred to as wall or membrane) which protects a core material comprising the above ingredients from the environment. Further, such formulations can be used to provide for controlled release of the ingredients in the core material by adapting the properties of the shells.

Emulsion-based methods of making microcapsules are known in the art, whereby a hydrophobic phase comprising the ingredient(s) to be encapsulated is dispersed in the form of droplets in an aqueous phase, and a polymeric membrane is created on the surface of the droplets. Polycondensation of urea with formaldehyde or melamine with formaldehyde to form aminoplast microcapsules is a popular process for generating such microcapsules. In these processes, the permeability of the membrane may depend on a number of factors such as the degree of cross-linking, the thickness of the membrane, etc. Leakage of the active ingredient(s) by diffusion through the membrane is a common problem of such microcapsules. This can be mitigated for example by increasing the cross-linking density of the wall or applying a coating to the wall. However, any such modifications will have an impact on the release properties of the microcapsules.

In some applications, for example when the material to be encapsulated is highly reactive, and this reactivity is essential to the functionality of the composition, it is particularly important that the microcapsules are stable and that leakage of the core material is minimised. However, increased stability typically comes with increased forces necessary to break the microcapsules and release the core material. This limits the possible applications of microcapsules, especially microcapsules containing reactive materials.

Further, in some applications, it is desirable to obtain high loadings of the core material, for example if overall concentration of the core material is important for the application. In particular when the core material is a reactive material, high loadings may be desirable as any unreactive material in the microcapsules may have an impact on the efficacy of the microcapsules as a source of reactive material. However, providing high loadings of reactive material is very difficult. In the field of self-healing materials using microcapsules comprising epoxy resins as a reactive material, the loadings of epoxy resins that have been achieved are typically low. Indeed, epoxy resins are typically diluted in an unreactive organic solvent in order to provide the dispersed hydrophobic phase that will form the core of the droplets.

There is therefore still a need for microcapsules that can encapsulate high loadings of core materials in a stable manner, while being able to controllably release the reactive materials at relatively low pressures.

### Statements of Invention

The invention resides in one or more microcapsules, comprising a core material and a wall that encloses the core material, wherein: the core material comprises a hydrophobic material; the walls comprise an aminoplast polymer; the microcapsules have an average diameter between 30 and 60 µm; and the microcapsules comprise at least 85% by weight of core material.

The hydrophobic material may make up at least 50%, preferably at least 70%, at least 80%, at least 90% or at least 95% by weight of the core material. The core material may consist of one or more hydrophobic materials. The hydrophobic material may be a hydrophobic liquid. The hydrophobic material may comprise a reactive material. The reactive material may make up at least 50% by weight of the core material.

Encapsulation of large amounts of core material is particularly difficult as large capsules with good physical integrity and low leakage are difficult to obtain. Encapsulation of reactive components in particular is a sensitive process as it is important to maintain a high loading of reactive (i.e. unreacted, and capable of reacting) components during the encapsulation process, as well as to ensure that the microcapsules are stable enough and structurally configured to prevent leakage (and the penetration of oxygen in the capsules) until the microcapsules are intentionally made to release the reactive component. The inventors have surprisingly discovered that it was possible to encapsulate very high loadings of core materials, and even reactive materials, in such a way that the core materials can be controllably released by application of relatively low pressures on the microcapsules, using the claimed combination of wall materials, proportions and sizes of microcapsules.

The reactive material may be hydrophobic.

The use of aminoplast polymers as wall materials is particularly advantageous in combination with hydrophobic core materials, especially reactive materials. Indeed, aminoplast polymers can be formed in situ around droplets of core material emulsified in a water-based solution. As all of the wall material for forming aminoplast polymers can be provided in the continuous phase (water phase), the risk of reaction between the reactive material in the discontinuous phase (droplets) and the wall forming materials may advantageously be low. As a result, high loadings of unreacted reactive materials may be achieved. Further, the inventors have discovered that relatively large capsules with relatively thin walls (leading to high loadings of core materials) could be obtained using aminoplast polymers, and that the resulting capsules were oxygen-tight.

The microcapsules may comprise at least 88%, at least 90%, at least 95%, or about 96% by weight of core material.

The core material may comprise no more than 50% by weight non-reactive compounds.

The microcapsules may have an average diameter between approximately 40 and approximately 60 µm. Preferably, the microcapsules may have an average diameter between approximately 45 and approximately 55 µm, and a peak maximum diameter of about 60 µm. The microcapsules may have an average diameter between approximately 30 and approximately 40 µm. Preferably, the microcapsules may have an average diameter of approximately 30 to approximately 40 µm with a peak maximum diameter of about 40 µm.

The use of a core material that does not comprise a non-reactive solvent allows for much higher loadings than were previously obtained with reactive materials.

The core material may be substantially free from non-reactive solvent.

The core material may comprise at most 50%, at most 40%, at most 30%, at most 20%, or at most 10% by weight of a non-reactive solvent. Preferably, the core material may comprise at most 10%, more preferably at most 5% of a non-reactive solvent.

The reactive material may comprise one or more active monomers or oligomers that can react to form an adhesive.

Microcapsules are particularly suitable for the manufacture of two-components adhesive compositions as they may be able to segregate one of the two-components for release at a desired time.

The reactive material may comprise an adhesive resin.

The reactive material may comprise an epoxy resin, an acrylate resin, a peroxyde radical initiator or isocyanate, preferably wherein the reactive material comprises an epoxy resin.

Epoxy resins (also known as polyepoxides) are widely used in many applications such as adhesives, self-healing materials, in paints and coatings, etc.

The epoxy resin may comprise a bisphenol A and/or a bisphenol F epoxy resin. Such resins may be produced by combining epichlorohydrin with bisphenol A and bisphenol F.

Preferably, the epoxy resin comprises a bisphenol F resin. Bisphenol F resins may advantageously have lower viscosity than bisphenol A resins and a higher mean epoxy content per gram. This may result in an increased chemical resistance once cured.

The core material may have a viscosity between 1 and 5000 mPas at 25 °C, preferably wherein the reactive material may have a viscosity between 300 and 2000 mPas at 25 °C.

Preferably, the core material comprises between about 55% and about 95% by weight of epoxy resin precursors, such as e.g. BPA and/or BPF.

The core material may comprise a reactive material such as an epoxy resin and a thinner that also comprises reactive groups, such as epoxides. For example, the core material may comprise hexanediol diglycydyl ether as a thinner. Preferably, the reactive thinner is present in an amount of between about 5% by weight and about 25% by weight of the core material.

Without wishing to be bound by theory, it is believed that high viscosities make it difficult to form an emulsion in water, which is a necessary step for the formation of the microcapsules, or at least an emulsion comprising droplets of the required size. The use of low viscosity reactive materials may reduce the need to add solvents to control the viscosity of the core material during production of the microcapsules and may contribute to obtaining microcapsules with high loadings of reactive material.

The microcapsule walls may comprise melamine formaldehyde.

The aminoplast polymer may be melamine formaldehyde or urea formaldehyde. Without wishing to be bound by theory, it is believed that melamine formaldehyde advantageously has higher network strength than urea formaldehyde because the former has 6 reactive hydrogens whereas the latter has 4 reactive hydrogens. As such capsules formed from melamine formaldehyde may be less likely to show problems such as diffusion of the core material through the wall. In embodiments, the walls comprise melamine formaldehyde, preferably as a major component, and urea, preferably as a minor component. The inclusion of urea in the wall material, for example in the form of urea formaldehyde, may help to obtain capsules that are able to break under relative low pressures.

The walls may be made from a melamine formaldehyde precondensate, preferably a partially methylated mono- and polymethylol-1,3,5-triamino-2,4,6-triazine precondensate, such as Luracoll ® SD.

The walls preferably form at most 10%, at most 5%, or at most 4% of the total weight of the microparticles.

The walls may be formed from an aminoplast monomer or oligomer and a negatively charged stabiliser colloid.

The use of a negatively charged stabiliser colloid may advantageously help to stabilise the aminoplast polymer in solution and during polymerisation, and may prevent aggregation of the microcapsules in solution. This may in turn improve the morphology and stability of the microcapsules.

The stabiliser colloid may be a polymeric colloid, preferably an acrylic copolymer with sulfonate groups such as Lupasol® PA140.

In embodiments, the walls comprise melamine formaldehyde, a stabiliser colloid, melamine and urea.

The walls may comprise melamine formaldehyde and a stabiliser colloid in a ratio of about 1.5:1 to 2.5:1, preferably about 2:1 by weight of melamine formaldehyde to stabiliser colloid. ]

The walls of the microcapsules may have an average thickness between approximately 50 nm and approximately 2000 nm, between approximately 50 nm and approximately 1500 nm, between approximately 200 nm and approximately 500 nm, or between approximately 200 nm and approximately 400 nm.

Such wall thicknesses may advantageously result in capsules that break under low activation pressure while maintaining their integrity during production and mixing with other components in compositions.

Preferably, the walls of the microcapsules have an average thickness between approximately 200 nm and approximately 400 nm.

The microcapsules may have an average wall thickness of about 300 nm to 400 nm or even 350 nm to 400 nm and an average diameter of approximately 40 to approximately 60 µm.

The microcapsules may have an average wall thickness of about 250 nm to 350 nm or even 275 nm to 325 nm and an average diameter of approximately 30 to approximately 40 µm.

The microcapsules may be broken by application of a pressure above approximately 1 N/mm² and below approximately 20 N/mm², below approximately 15 N/mm², below approximately 10 N/mm², below approximately 5 N/ mm², or at approximately 4 N/mm².

Activation pressures in those ranges enable the use of the microcapsules in pressure sensitive adhesives where the adhesive is to be activated by applying pressure by hand, or in any other application where activation at low pressures is advantageous, while not being so low as to risk excessive rupture of the microcapsules during manufacture, handling, mixing, storage etc. For examples, activation pressures in those ranges may be useful in the preparation of self-healing coating compositions, or to encapsulate pigments that can be released to indicate the location of e.g. microcracks in a material.

The invention further resides in a microcapsule slurry which may comprise the microcapsules suspended in a liquid, optionally further comprising one or more additives selected from: formaldehyde scavengers, viscosity additives, and stabilisers, preferably wherein the formaldehyde scavenger is selected from melamine and/or urea.

The slurry may comprise a thickener.

The slurry may comprise at least 40%, and preferably at least 45% microcapsules by weight. As the skilled person would understand, the concentration of microcapsules in the slurry may be increased by evaporation/drying. Slurries that have higher concentrations of microcapsules may be advantageous because they also contain higher concentrations of the encapsulated product (core material). Conversely, higher concentrations of microcapsules lead to increases in the viscosity of the slurry, which may lead to higher shear forces, thereby potentially increasing the risk of rupture of the microcapsules during production and/or handling. The inventors have found that slurries having concentrations of microcapsules between about 40% and about 50% by weight strike a good balance between these two competing factors.

The slurry may comprises one or more formaldehyde scavengers at concentrations of about 0 to 30%, preferably about 0 to 20%, such as about 5% to 10% by weight. The slurry may comprise about 5 to 10% by weight of urea and/or melamine (i.e. 5 to 10% by weight of urea, melamine, or melamine and urea to a combined amount of 5 to 10% by weight).

The invention also resides in a method of making a microcapsule slurry, the method comprising:
providing an aqueous solution comprising an aminoplast polymer precursor;
adding a hydrophobic core material, optionally comprising a reactive material, to the aqueous solution and forming a pre-emulsion in agitation conditions such that droplets are formed having an average diameter of between 30 and 60 µm;
bringing the pH of the solution to between 3 and 4, optionally between 3.5 and 3.8, to start polymerisation of the aminoplast polymer precursor;
maintaining the agitation conditions for a period of time t1, at a temperature T1;
changing the agitation conditions to reduce the shear force and maintaining these conditions for a period of time t2;
increasing the temperature to a temperature T2 and maintaining this temperature for a period of time t3, while adding a formaldehyde scavenger for at least part of the period t3,
wherein temperature T1 is below 40 °C, temperature T2 is between 45 and 70 °C, the periods of time t1, t2 and t3 together add up to at least 4 hours.

Advantageously, the use of this combination of agitation conditions, temperature and time allows generation of very thin walled microcapsules that are highly stable and do not lead to leakage of the reactive material during manufacture or storage.

Any of the features described in relation to the first and second aspect apply equally to the present aspect. In particular any of the features of the microcapsules, including any components and properties of the capsules, wall and core material, and any of the properties of the slurry may be present in the methods according to the present aspect. In particular, the use of relatively low temperatures during polymerisation and hardening of the capsules may lead to reduced cross-linking compared to known protocols for the generation of aminoplast microcapsules. The use of more gentle agitation conditions than are used for the generation of the appropriate size of droplets, during at least some of the polymerisation and hardening of the capsules may also reduce the speed of polymerisation. This slower, more exact bonding may lead to the formation of walls that have fewer holes, reducing the risk of leakage of the reactive material in the core. Further, the use of relatively low temperatures may reduce the risk of unwanted reactions between the reactive material and any components in the composition. Finally, these reduced temperatures may reduce thermal expansion of the core material, thereby reducing the strain on the capsule walls and resulting in capsules that have good structural integrity despite having very thin walls.

T1 may be between 20 and 40 °C, between 25 and 35 °C, or about 30 °C. T2 may be between 50 and 65 °C, between 55 and 65 °C, or about 60 °C.

The pH of the solution may be brought to between 3 and 4 by addition of formic acid. Any other acid is possible, although HCI is preferably avoided as it may react with formaldehyde that may be present in the aqueous solution to form toxic products.

The agitation conditions providing droplets having an average diameter of between 30 and 60 µm may preferably comprise the use of a blade dissolver stirrer or a turbine stirrer, and a stirring speed of between 600 rpm and 1200 rpm, preferably between 650 and 1100 rpm. Preferably, the pre-emulsion is formed by maintaining the agitation conditions such that droplets are formed having an average diameter of between 30 and 60 µm for about 5 minutes, before lowering the pH of the solution.

The agitation conditions providing reduced shear force preferably comprise the use of a helical stirrer or anchor stirrer and a stirring speed of between 200 rpm and 400 rpm, preferably between 200 and 300 rpm, such as about 250 rpm.

The polymer precursor may be a melamine-formaldehyde precondensate, For example, partially methylated mono- and polymethylol-1,3,5-triamino-2,4,6-triazine precondensates, such as that available as Luracoll ® SD, may be used.

The hydrophobic core material may be added in an amount of between about 30 and about 50%, preferably between about 40% and about 45% by weight of the final solution (comprising any solvents, formaldehyde scavenger(s), additives (e.g. stabiliser) and aminoplast polymer precursor(s)).

The aminoplast polymer precursor may be added in an amount of between about 1 and about 3%, preferably between about 1.5% and about 2.5%, such as about 1.9% by weight of the final solution.

The aminoplast polymer precursor and hydrophobic core materials may be present in weight ratios (weight of aminoplast polymer precursor relative to weight of core material) of between about 2% and about 6% by weight, between about 3% and about 5% by weight, such as about 4.4% by weight.

The aqueous solution comprising an aminoplast polymer precursor may additionally comprise a negatively charged stabiliser colloid.

The stabiliser colloid may be a polymeric colloid, preferably an acrylic copolymer with sulfonate groups such as Lupasol® PA140.

The polymeric colloid may be present in amounts of approx. 45 to 55 %, preferably about 47 to 50%, such as about 49% by weight of the amount of the aminoplast polymer precursor.

The aminoplast polymer precursor may be a melamine formaldehyde precondensate, such as a polymethylol-1,3,5-triamino-2,4,6-triazine pre-condensate. The aminoplast polymer precursor and negatively charged polymeric colloid may be present in ratios of between 1.5:1 and 2.5:1 parts by weight of the pre-condensate to stabiliser.

t1 may be between 5 and 60 minutes, and/or wherein t2 is between 20 and 60 minutes, t3 is at least 3 hours. T2 may be about 30 minutes.

The formaldehyde scavenger may be gradually added for a first period of time t3a of about 90 minutes, and the temperature T2 is maintained for at least a further period t3b of about 2 hours.]

The formaldehyde scavenger may comprise melamine and/or urea.

Urea may advantageously be used to absorb excess formaldehyde that may be present in the solution comprising the aminoplast polymer precursors. Urea may advantageously form part of the walls of the capsules and may help to obtain capsules that are breakable under relatively low pressures.

Melamine may advantageously be used to absorb excess formaldehyde. Additionally, melamine may form a protective shell during the wall formation process. Further, melamine may usefully help to reduce the charge of the microcapsules so that they may be easier to mix in some compositions.

The formaldehyde scavenger may comprise both melamine and urea.
Melamine may be present in amounts of between about 0.5% and about 1.5 % by weight, preferably between about 0.8% and about 1.2% by weight, such as about 0.9% by weight of the final composition.

Urea may be present in amounts of between about 0.5% and about 2% by weight, preferably between about 1% and about 1.5% by weight, such as about 1.3% by weight of the final composition.

Melamine may be present in amounts of between about 40% and about 55% by weight, between about 45% and about 50% by weight, such as about 47% by weight of the aminoplast polymer precursor.

Urea may be present in amounts of between about 65% and about 75% by weight, preferably between about 68% and about 72%, such as about 70% by weight of the aminoplast polymer precursor.

The method may further comprise allowing the microcapsules slurry to cool down to room temperature, optionally in the presence of urea.

The core material may be added as a liquid that has a viscosity between 1 and 5000 mPas at 25 C, preferably wherein the reactive material has a viscosity between 300 and 2000 mPas at 25 C.

The core material may comprise an epoxy resin and an epoxide containing solvent.

According to a further aspect, the invention also relates to microcapsules obtained using the methods described herein.

The invention further resides in a composition comprising the microcapsules and a matrix.

The matrix may optionally comprise a further reactive material that can react with the reactive material in the microcapsules.

The composition may be an adhesive composition. In this case, for example, the reactive material of the microcapsules may comprise an epoxy resin and the further reactive material of the matrix may comprise a hardener, optionally an amine hardener.

Two-component adhesives based on epoxy resins are commonly used in a variety of applications. However, such two-component adhesives that are provided as a single composition are particularly difficult to make, in parts due to the difficulties associated with stably providing large amounts of unreacted highly reactive materials such as epoxy resins within a composition comprising a hardener. This is particularly difficult where a highly reactive material like an epoxy resin is to be encapsulated such that it can be released by application of relatively low pressures, as stability during manufacture, mixing and storage has opposite requirements than low pressure activation forces. The inventors have surprisingly discovered that the microcapsules and methods of the invention enabled balancing of these requirements to obtain a high performance pressure-sensitive adhesive.

The composition may be a pressure sensitive adhesive, or a self-healing material.
The reactive material in the microcapsules and the further reactive material may be present in stoichiometric amounts.

The composition may further comprise a thickener. The thickener may be hydrophilic. The thickener may be a solid. The thickener may be inert and/or inorganic. The thickener may have thixotropic properties. The thickener may be a fine powder, for example a fused silicate powder.

Features of any one aspect or embodiment of the invention may be used, alone or in appropriate combination, with other aspects and embodiments as appropriate.

### Brief Description of the Drawings

Embodiments of the invention will now be described, by way of example only, with reference to the accompanying drawings, in which:
Figure 1 is schematic cross-sectional view of a microcapsule according to embodiments of the invention;
Figure 2 is flow chart illustrating a method of making microcapsules according to embodiments of the invention;
Figures 3A-3E show data obtained using a sample of microcapsules according to the invention (Sample A); Figures 3A and 3B are scanning electron microscope images of the capsules of Sample A, where Figure 3B shows a cross section through a capsule of Sample A; Figure 3C-D show microscope images of the capsules of Sample A; and Figure 3E shows the size distribution of the capsules of Sample A;
Figures 4A-4C show data obtained using a sample of microcapsules according to the invention (Sample B); Figures 4A-B show a microscope images of the capsules of Sample B; and Figure 4C shows the size distribution of the capsules of Sample B;
Figures 5A-5E show data obtained using a sample of microcapsules according to the invention (Sample C); Figure 5A shows the size distribution of the capsules of Sample C; Figures 5B-C show microscope images of the capsules of Sample C;
Figures 5D and 5E are scanning electron microscope images of the capsules of Sample C, where Figure 5E shows a cross section through a capsule of Sample C;
Figures 6A-6E show data obtained using a comparative sample of microcapsules (Sample D); Figure 6A shows the size distribution of the capsules of Sample D;
Figures 6B-C show a microscope images of the capsules of Sample D; Figures 6D and 6E are scanning electron microscope images of the capsules of Sample D, where Figure 6E shows a cross section through a capsule of Sample D;
Figures 7A-7E show data obtained using a comparative sample of microcapsules (Sample E); Figure 7A shows the size distribution of the capsules of Sample E;
Figures 7B-C show microscope images of the capsules of Sample E; Figures 7D and 7E are scanning electron microscope images of the capsules of Sample E, where Figure 7E shows a cross section through a capsule of Sample E; and
Figures 8A-8E show data obtained using a comparative sample of microcapsules (Sample F); Figure 8A shows the size distribution of the capsules of Sample F;
Figures 8B-C show microscope images of the capsules of Sample F; Figures 8D and 8E are scanning electron microscope images of the capsules of Sample F, where Figure 8E shows a cross section through a capsule of Sample F.

### Description of an Embodiment of the Invention

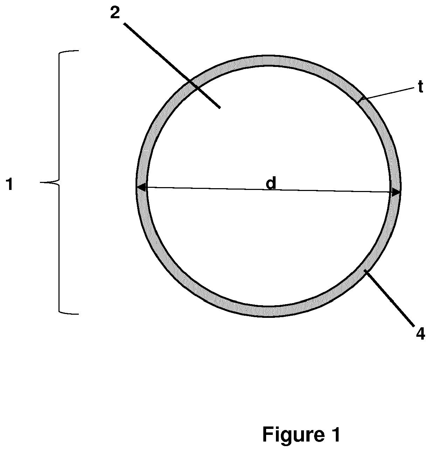

Figure 1 is a schematic cross-sectional view of a microcapsule 1 according to embodiments of the invention. The microcapsule comprises a core 2, and a wall 4 (also referred to as shell or membrane). The core 2 contains a core material. The core material may comprise a first or core reactive material which is selected to react with a second or external reactive material. The wall 4 keeps the core (optionally reactive) material separate from any external (optionally reactive) material. When the core material and external material are reactive, the wall 4 separates these two materials, halting reaction between the primary and secondary reactive materials until such time as the microcapsule 1 is ruptured and the core reactive material is released.

In use, the microcapsules may be incorporated into a composition comprising the microcapsules suspended in a matrix, with the matrix comprising the external (optionally reactive) material.

Each microcapsule has an outer diameter d (also referred to simply as "diameter"), and a thickness t of the wall 4. In the context of the invention, it is assumed that the thickness of the wall 4 is substantially constant in each microcapsule. Owing to the production process of microcapsules, a population of microcapsules 1 will have a statistical distribution of diameters d and thicknesses t, which can be characterised by an average (arithmetic mean) diameter and thickness. The microcapsules disclosed herein advantageously have an average diameter of between approximately 30 and approximately 60 µm. The microcapsules disclosed herein advantageously have an average wall thickness between approximately 50 nm and approximately 2000 nm, preferably between approximately 50 nm and approximately 1500 nm, between approximately 0.1 µm and approximately 1 µm, or between approximately 200 nm and approximately 500 nm.

The diameter and thickness ranges for the microcapsules 1 are important for the stability and controlled release properties of the microcapsules 1. A relatively large diameter and/or a small thickness runs the risk of the microcapsules 1 rupturing under their own weight, while a relatively small diameter and/or large thickness may pose manufacturing difficulties, restrict the volume of core material that can be contained in each microcapsule 1, and/or have an impact on the pressure necessary to release the core material from the capsules.

The inventors have found that a suitable diameter range is between approximately 30 µm and approximately 60 µm, which achieves a balance between stability and ease of manufacture. Diameter ranges of approximately 40 to approximately 60 µm or approximately 30 to approximately 40 µm are particularly preferred. For example capsules with an average diameter between 40 and 60 µm, preferably between 45 and 55 µm, and a peak maximum diameter of about 60 µm may advantageously be used. Alternatively, capsules with an average diameter of approximately 30 to approximately 40 µm with a peak maximum diameter of about 40 µm may advantageously be used. The preferred diameter range may vary according to a preferred wall thickness range (see below).

The inventors have further found that a suitable thickness range is between approximately 50 and approximately 2000 nm, more specifically between approximately 50 and approximately 1000 nm. Thicknesses of about 200 to 400 nm are particularly preferred. Such wall thicknesses may advantageously result in capsules that break under low activation pressure (for example the sort of pressure that can be easily applied by hand - such as a pressure of about 1 to 4 N/mm², preferably about 3 to 4 N/mm²) while maintaining their integrity during production and mixing with other components in compositions. Further, the inventors have found that it is particularly advantageous for this purpose if average wall thicknesses of about 300 nm to 400 nm or even 350 nm to 400 nm are used in combination with diameter ranges of approximately 40 to approximately 60 µm. Alternatively, the inventors have found that it is particularly advantageous for this purpose if average wall thicknesses of about 250 nm to 350 nm or even 275 nm to 325 nm are used in combination with diameter ranges of approximately 30 to approximately 40 µm.

The microcapsules 1 are capable of rupturing when sufficient pressure is applied, upon which the core material is released from the microcapsules 1 and the core reactive material therein is available to react spontaneously or with other compounds in the environment of the microcapsules.

The threshold pressure is carefully tuned so as to be below 20 N/mm², below 15 N/mm², below 10 N/mm², or below 5 N/mm², and above 1 N/mm². A population of microcapsules is deemed to have a threshold activation pressure p when at least 50% of the microcapsules are broken after application of the pressure p. Conversely, microcapsules are deemed to be resistant to a threshold pressure when at least 50% of the microcapsules do not rupture under said pressure. Preferably at least 70%, at least 80% or at least 90% of the microcapsule population do not rupture under said pressure. Threshold pressures between approximately 1 N/mm² and approximately 4 N/mm² are particularly preferred. With activation pressures in those ranges, the microcapsules 1 are capable of rupturing under a relatively low pressure which can be easily and deliberately applied by hand, but the microcapsules 1 will not rupture at a pressure below 1 N/mm² which is the sort of pressure that might feasibly be applied during the course of handling and transportation. As the skilled person would understand, low activation pressures may also be beneficial in other applications where the activation pressure will not necessarily be applied by hand, such as e.g. for the manufacture of self-healing material where the core material is to be released e.g. when the material is scratched.

The threshold pressure is tuned by the materials and structure of the microcapsules 1. For example, the diameter of the microcapsules 1, the proportion of core material 2 inside the microcapsules 1, and the material and thickness of the wall 4 of the microcapsules 1, play a role in the threshold pressure of the microcapsules 1.

The proportion of the core 2 relative to the wall 4 of the microcapsules 1 is carefully selected. The material of the wall is substantially unreactive (i.e. it is selected such that it does not react with the external reactive material), and so higher weight proportions of wall material could disrupt the reaction in which the core reactive material is intended to take part. When the core reactive material is an adhesive component, this may for example lead to a poor adhesive bond. The microcapsules advantageously comprise at least 80% by weight of core material, preferably at least 85% of core material. In embodiments, the microcapsules comprise at least 90%, at least 95%, or about 96% by weight of core material.

As noted above, the core 2 comprises a core material. When the core material is reactive, it may be referred to hereafter as simply a 'reactive material'. In the context of the invention, a reactive material is a material that comprises one or more compounds that have reactive groups such as epoxides, acrylates, radical initiators such as peroxide radical initiators, isocyanates, components of resins, coatings and healing agents (such as dicyclopentadiene, linseed oil, castor oil and other fatty acids and combinations of fatty acids, etc.) etc, or a material that can catalyse a reaction between other components, such as metal-organic compounds (e.g. dibutyl tin dilaurate, Zn-octoate, etc.). The core 2 may instead or in addition comprise one or more non-reactive compounds such as a solvent (e.g. toluene, kerosene, etc.) or an oil (e.g. scented oil). Advantageously, the core 2 comprises at least 50% by weight of core reactive material. In other words, the core 2 may comprise at most 50% by weight of non-reactive compounds. Further, the core 2 may comprise up to about 95% by weight of core reactive material. In other words, the core 2 may comprise at least 5% by weight of non-reactive compounds. The core reactive material is preferably hydrophobic, or is provided in a hydrophobic form such as e.g. in solution.

Encapsulation of reactive components is a particularly sensitive process as it is important to maintain a high loading of reactive (i.e. unreacted, and capable of reacting) components during the encapsulation process, as well as to ensure that the microcapsules are stable enough and structurally configured to prevent leakage until the microcapsules are intentionally made to release the reactive component. The inventors have surprisingly discovered that it was possible to encapsulate very high loadings of reactive materials in such a way that the reactive materials can be controllably released by application of relatively low pressures on the microcapsules, using the described combination of wall materials, proportions and sizes of microcapsules.

The core reactive material may comprise one or more active monomers or oligomers that can react to form an adhesive. Indeed, microcapsules are particularly suitable for the manufacture of two-components adhesive compositions as they may be able to segregate one of the two-components for release at a desired time. The core reactive material may for example comprise an adhesive resin, such as an epoxy resin or acrylate resin.

Epoxy resins with high epoxide equivalents are particularly preferred. A suitable epoxy resin may comprise a bisphenol A (BPA) and/or a bisphenol F (BPF) epoxy resin. Such resins may be produced by combining epichlorohydrin with bisphenol A and bisphenol F. Preferably, the epoxy resin comprises a bisphenol F resin. Bisphenol F resins may advantageously have lower viscosity than bisphenol A resins and a higher mean epoxy content per gram. This may result in an increased chemical resistance once cured.

The core material 2 is preferably liquid at room temperature. The use of a material that is liquid at room temperature ensures that the core material can flow out of the microcapsules when they are ruptured, and enables the formation of an emulsion during the manufacture of the microcapsules (see below) at temperatures that are suitable for the carefully controlled polycondensation of the wall.

Preferably, the core material has a viscosity between approximately 1 and approximately 5000 mPas at 25 °C. It is particularly advantageous if the core material has a viscosity between approximately 300 and approximately 2000 mPas at 25 °C. Without wishing to be bound by theory, it is believed that high viscosities make it difficult to form an emulsion in water, which is a necessary step for the formation of the microcapsules, or at least an emulsion comprising droplets of the required size.

The core material preferably has a viscosity within the above ranges. For example, the core material may comprise a reactive material such as an epoxy resin, and a thinner that also comprises reactive groups such as epoxides. When reactive core materials are used, the use of low viscosity reactive materials / thinners that have reactive groups may reduce the need to add solvents to control the viscosity of the core material during production of the microcapsules and may contribute to obtaining microcapsules with high loadings of reactive material.

Core materials comprising epoxy resins suitable for use according to the invention include BPA / BPF blends with difunctional reactive thinners. Suitable commercially available products include Epinal KR 44.47 from BTO Epoxy (which has a viscosity at 25 °C of 550-950 mPas), Araldite® GY 794 from Huntsman (which has a viscosity at 25 °C of 650-750 mPas), Araldite® GY 764 from Huntsman (which has a viscosity at 25 °C of 350-550 mPas), EPIKOTE Resin 355 from Hexion (which has a viscosity at 25 °C of 400-600 mPas) and EPIKOTE Resin 357 (which has a viscosity at 25 °C of 600-800 mPas).

The wall 4 of the microcapsules 1 is preferably made of a material which is chemically resistant to both the reactive material inside the core 2, and the intended environment of the microcapsules 1. In addition, the strength of the wall material 4 must be high enough to hold the weight of the core 2 but must also be low enough to be able to rupture at the threshold pressures indicated above. Polymers such as polyacrylate, aminoplast polymers (urea formaldehyde resin, melamin-formaldehyde resin, urea-melamin-formaldehyde resin), alginate or other suitable polymers or other materials have been used for this purpose.

Preferably, the wall 4 comprises an aminoplast polymer. The use of aminoplast polymers as wall materials is particularly advantageous in combination with hydrophobic core reactive materials. Indeed, aminoplast polymers can be formed in situ around droplets of core material emulsified in a water-based solution. As all of the wall material for forming aminoplast polymers can be provided in the continuous phase (aqueous solution phase), the risk of reaction between the core reactive material in the discontinuous phase (droplets) and the wall forming materials may advantageously be low. As a result, high loadings of unreacted core reactive materials may be achieved. By contrast, polyacrylate and polyurethane / polyurea polymer systems that are commonly used to make stable core-shell microcapsules require that the wall-forming materials are mixed into the hydrophobic core material. In particular, polyurea capsules require the use of diisocyanates dissolved in the core material, and polyacrylates are obtained by radical induced polymerisation such that initiators are required. This is potentially problematic when reactive materials are to be encapsulated as this may lead to reactions between the wall forming materials and the reactive material in the core material. For example, diisocyanate is a highly reactive molecule that will react with e.g. epoxides by nucleophilic cleavage and with other nucleophilic compounds like ROH and RNH₂ that may be present in the core material. Further, when using aminoplats polymers, droplets of core material can be stabilised by a negatively charged compound such that the positively charged wall forming material will be concentrated on the droplet, resulting in more complete use of the wall forming material.

Amongst aminoplast polymers, melamine formaldehyde is particularly preferred. Without wishing to be bound by theory, it is believed that melamine formaldehyde advantageously has higher network strength than urea formaldehyde because the former has 6 reactive hydrogens whereas the latter has 4 reactive hydrogens. As such capsules formed from melamine formaldehyde may be less likely to show problems such as diffusion of the core material through the wall.

The walls may be made using a melamine formaldehyde pre-condensate, as will be explained further below. A partially methylated mono- and polymethylol-1,3,5-triamino-2,4,6-triazine pre-condensate is preferably used. Amongst these, the melamine formaldehyde pre-condensate available under the trade name Luracoll ® SD is particularly preferred. Without wishing to be bound by theory, it is believed that partially etherified prepolymers that have been optimised for microencapsulation reactivity, such as Luracoll ® SD, are particularly beneficial because their reactivity is such that they do not react with each other until they are concentrated on the droplet (i.e. their reactivity is high enough to react when concentrated on the droplet but not so high as to react in solution before concentrating on the droplet).

The walls are preferably formed from an aminoplast monomer or oligomer in the presence of a negatively charged stabiliser colloid, some of which will form part of the finished wall of the microcapsules. The use of a negatively charged stabiliser colloid may advantageously help to stabilise the aminoplast polymer in solution and during polymerisation, and may prevent aggregation of the microcapsules in solution. This may in turn improve the morphology and stability of the microcapsules. Preferably, the stabiliser colloid is a polymeric colloid. Amongst these, acrylic copolymers with sulfonate groups such as the polyacrylamidopropane sulfonic acid sodium salt available under the trade name Lupasol® PA140 are particularly preferred. Without wishing to be bound by theory, it is believed that compounds such as Lupasol® PA140, with high negative ionic strengths (such that relatively small amounts are needed), good water solubility and the ability to cover droplets with negative charges will be particularly beneficial. The aminoplast monomer/oligomer (preferably melamine formaldehyde precondensate) and negatively charged stabiliser colloid are preferably used at a ratio of about 1.5:1 to 2.5:1 by weight, preferably about 2:1 by weight (i.e. twice the weight of aminoplast monomer/oligomer compared to the weight of stabiliser colloid). The inventors have surprisingly found that using relatively small amounts of aminoplast polymer precursor compared to the amount of stabiliser colloid (conversely, using larger weights of stabiliser colloid compared to the weight of aminoplast polymer precursor than is usual in the art) enables to reduce the thickness of the walls of the capsules, thereby resulting in larger proportions of core material in the finished microcapsules (i.e. lower shell to core ratios). This in turn enabled the inventors to obtain capsules that can break under relatively low pressures which being stable enough to be processed (i.e. maintain their integrity during production and processing).

As will be explained further below, the microcapsules 1 of the disclosure can be produced as a suspension in a liquid, also referred to as a microcapsule slurry.

In addition to the microcapsules and liquid, the microcapsule slurry may further comprise one or more additives such as formaldehyde scavengers, viscosity additives, and/or stabilisers.

Formaldehyde scavengers may advantageously be used to react with formaldehyde in the slurry, which may be present from the wall forming solution. Formaldehyde is toxic and an undesirable component of the slurry. Preferably, the formaldehyde scavenger is selected from melamine and/or urea. Melamine may be particularly advantageous as it may absorb excess formaldehyde, form a protective shell during the later phases of the wall formation process (hardening), and/or reduce the charge of the microcapsules so that they may be easier to mix in some compositions. The use of urea may be particularly advantageous as some of the urea may be incorporated in the wall material, for example in the form of urea formaldehyde. This may help to obtain capsules that are able to break at relatively low pressures.

The slurry may further comprise a thickener. Thickeners may usefully contribute to optimising the properties of the composition in which the microcapsules are to be used, for example reducing movement of the microcapsules in the solution which may otherwise reduce the proportion of microcapsules that are broken by application of a specific activation pressure.

The microcapsule slurry may also comprise one or more stabilisers, which may usefully prevent aggregation of the microcapsules and/or help with the mixing properties of the slurry in the composition in which the microcapsules are intended to be used.

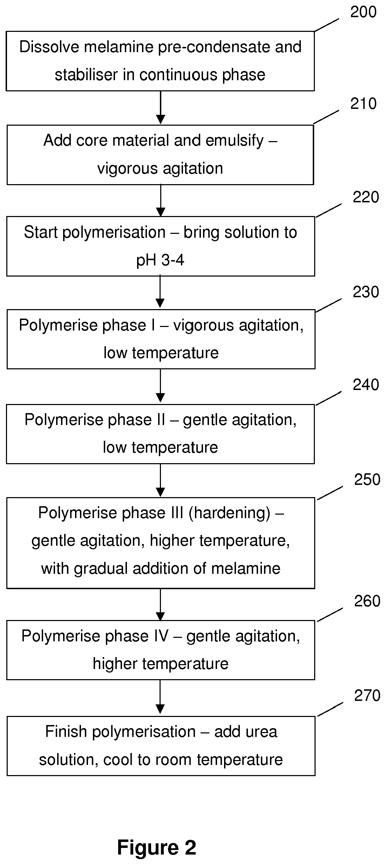

Figure 2 is flow chart illustrating a method of making microcapsules according to embodiments of the invention. The inventors have discovered that carefully selected choices of conditions (in particular time regime, agitation conditions and temperature) and ingredients during manufacture of the microcapsules according to the invention enabled them to obtain a high proportion of intact microcapsules that have the geometric and physico-chemical properties necessary to encapsulate high loadings of reactive materials in a stable manner while being able to release these reactive materials under relatively low activation pressure.

At step 200, a continuous phase in the form of an aqueous solution comprising an aminoplast polymer precursor is provided. In the illustrated embodiment, this is performed by dissolving a melamine pre-condensate in an aqueous solution that further comprises a stabiliser. The pre-condensate, when polymerised, and the stabiliser at least to some extent will form part of the wall of the microcapsules produced. As explained above, other aminoplast polymer precursors may be used. For example, urea formaldehyde or urea-melamine formaldehyde precursors may be used. Amongst aminoplastic polymers, melamine formaldehyde are particularly preferred, since capsules formed from melamine formaldehyde may be less likely to show problems such as diffusion of the core material through the wall, compared to other aminoplastic polymers.

Melamine formaldehyde pre-condensates are convenient water soluble oligomers for the manufacture of melamine formaldehyde microcapsules. A partially methylated mono- and polymethylol-1,3,5-triamino-2,4,6-triazine pre-condensate is preferably used, such as the melamine formaldehyde pre-condensate available under the trade name Luracoll® SD is particularly preferred.

The stabiliser advantageously helps to stabilise the aminoplast polymer in solution and during polymerisation, and may prevent aggregation of the microcapsules in solution. A negatively charged stabiliser colloid is preferably used. Preferably, the stabiliser colloid is a polymeric colloid. Amongst these, acrylic copolymers with sulfonate groups such as that available under the trade name Lupasol® PA140 are particularly preferred. Such stabilisers may be particularly advantageous in combination with a partially methylated mono- and polymethylol-1,3,5-triamino-2,4,6-triazine pre-condensate such as the melamine formaldehyde pre-condensate available under the trade name Luracoll ® SD. Indeed, the combination of these two types of compounds have been found by the inventors to result in particularly good network strength in the polymeric shell, and to avoid the generation of side reaction with the core reactive materials in the core, particularly when the core comprises epoxy resins.

The relative amounts of the stabiliser and the aminoplast polymer precursor may vary depending on the particular compounds used. When using melamine formaldehyde pre-condensates such as a polymethylol-1,3,5-triamino-2,4,6-triazine pre-condensate in combination with a negatively charged polymeric colloid (such as acrylic copolymers with sulfonate groups), ratios of between 1.5:1 and 2.5:1 parts by weight of the pre-condensate to stabiliser may be used. For example, ratios of about 45 to 55 %, preferably about 47 to 50%, such as about 49% by weight of stabiliser relative to the weight of precondensate may be used.

The relative amounts of the aminoplast polymer precursor and water in the continuous phase at step 200 may vary depending on the particular compounds used. When using melamine formaldehyde pre-condensates such as a polymethylol-1,3,5-triamino-2,4,6-triazine pre-condensate, the amount of the aminoplast polymer precursor in the continuous phase at step 200 may vary between about 1 and about 3%, preferably between about 1.5% and about 2.5%, such as about 1.9% by weight of the continuous phase . Suitably, amounts of aminoplast polymer precursor in the continuous phase are chosen such that the concentration of the precursor is below the saturation concentration of the precursor. Advantageously, the aminoplast polymer precursor and stabiliser (if using) may be added to a container comprising water (preferably distilled / deionised water) and stirred until all of the compounds are dissolved / the solution is clear.

At step 210, the core material as a hydrophobic liquid is added to the aqueous solution, and emulsified by vigorous agitation. In particular, agitation conditions are advantageously chosen such that droplets having an average diameter of between 30 and 60 µm. Suitable agitation conditions for this may involve the use of a dissolver stirrer, such as a blade dissolver stirrer, or a turbine stirrer, such as a pitched blade turbine stirrer. Further, suitable agitation speeds may be in the range of between about 600 rpm and about 1200 rpm. Agitation speeds between about 650 and about 1100 rpm are particularly preferred. The agitation conditions may suitably be maintained for a period of between about 2 minutes and about 10 minutes, preferably about 5 minutes. The hydrophobic core material is suitably added in an amount of between about 30 and about 50%, preferably between about 40% and about 45% by weight of the final solution. The aminoplast polymer precursor and hydrophobic core materials may suitably be present in weight ratios (weight of aminoplast polymer precursor relative to weight of core material) of between about 2% and about 6% by weight, between about 3% and about 5% by weight, such as about 4.4% by weight.

As mentioned above, the core material is preferably added as a liquid that has a viscosity between approximately 300 and approximately 2000 mPas at 25 °C, where viscosity may be measured using a Brookfield viscometer with an appropriate spindle, as known in the art, for example spindle #2. Advantageously, when the core material comprises a core reactive material that itself has a viscosity between approximately 300 and approximately 1000 mPas at 25 °C, it is possible for the core reactive material alone to be used as a core material, i.e. without the addition of any inert viscosity reducing additives. Suitably, the core material may comprise an epoxy resin and an epoxide having a low molecular weight as a reactive diluent.

At step 220, the polymerisation of the aminoplast polymer precursor is started by reducing the pH of the solution of step 210 to between 3 and 4, preferably between 3.5 and 3.8. In order to bring the pH of the solution of between 3 and 4, a solution of formic acid may be used. As the skilled person would understand, any acid may be used for this purpose, and the amounts of acid used will depend on the volume of the solution and the particular acid used. HCI is preferably avoided as it may react with formaldehyde that may be present in the aqueous solution to form toxic products.

At step 230, the polymerisation of the precursor is conducted under the same agitation conditions as in step 220. Preferably, the temperature T1 of the solution at step 230 (and optionally also at step 220 and optionally any prior step) is below approximately 40 °C, such as between approximately 20 °C and approximately 40 °C, or between approximately 25 °C and approximately 35 °C. Suitably, a temperature of about 30 °C may be used. The use of temperatures in those range may, as further explained above, adjust the polymerisation speed such that strong walls with few holes, preferably without holes, are generated, where lower temperatures may result in slow/no polymerisation, and higher temperatures may increase the risk of creating of holes due to rapid formation of highly cross-linked polymers. The conditions in step 230 are maintained for a period of time t1, which is adjusted depending on the size of the droplets to be obtained, and may suitably be between 5 minutes and 60 minutes, preferably about 40 minutes. As the skilled person would understand, the time needed to obtain droplets of a desired size may depend on multiple factors including the stirring speed and the viscosity of the core material. The inventors have found times of 5 to 60 minutes to be suitable to obtain droplets that result in microcapsules having a diameter of between approximately 30 and approximately 60 µm with a range of core materials having viscosities between 300 and approximately 1000 mPas at 25 °C, especially when using agitation speeds in the range of between about 600 rpm and about 1200 rpm. Suitably, the size of the droplets can be monitored in the vessel during agitation, either continuously or at intervals, and the agitation conditions can be maintained until a uniform-looking emulsion with droplets within a desired range of sizes is obtained. At the end of step 230, the solution may comprise droplets of core material surrounded by an at least partially polymerised shell having a diameter of between approximately 30 and approximately 60 µm.

At step 240, the agitation conditions are changed to conditions associated with reduced shear forces (referred to as "gentle agitation"). These conditions may be maintained for a period of time t2. Suitably, t2 is between approximately 20 and approximately 60 minutes. Preferably, t2 is about 30 minutes. Agitation conditions associated with reduced shear force comprise the use of a helical stirrer or anchor stirrer. Further, a speed of between approximately 200 rpm and approximately 400 rpm may be used. During step 240, the temperature is suitably maintained at or close to T1.

At step 250, the temperature of the solution is increased to a second temperature T2 while maintaining gentle agitation conditions, allowing further polymeric bonds to be created in a process called hardening. In the illustrated embodiment, melamine is gradually added over a period of time t3a. Melamine may advantageously serve to absorb excess formaldehyde, as well as to protect the forming walls and prevent aggregation of the microcapsules. Other formaldehyde scavengers may be used, such as e.g. urea. Melamine may be added as an aqueous solution adjusted to a pH of about 4.5, for example using formic acid. Suitably, an amount of melamine representing between about 20% by weight and about 60% by weight, between about 40% and about 55% by weight, between about 45% and about 50% by weight, such as about 47% by weight of the amount of aminoplast precursor used at step 200 may be used.

At step 260, gentle agitation conditions and temperature T2 are maintained for an additional period of time t3b. Temperature T2 may advantageously be chosen to be between approximately 45 °C and approximately 70 °C, between approximately 50 °C and approximately 65 °C, or between approximately 55 °C and approximately 65 °C. Temperatures of about 60 °C may be particularly suitable. The inventors have discovered that performing the hardening step at a relatively low temperature (below 70 °C, preferably about 60 °C), enabled them to reduce the amount of cross-linking that occurs in the polymer, leading to more flexible capsules than would be obtained with higher temperatures that are commonly used in similar processes. The inventors have surprisingly discovered that the combination of such slightly more flexible walls with the reduced thickness of walls obtained by using comparatively lower amounts of aminoplast polymer precursor than is common in the art enabled them to obtain capsules that are flexible enough to not rupture during manufacture and processing (i.e. to not break under the shear forces of the stirrers used in manufacture and processing), while being fragile enough to be ruptured under relatively low activation pressures. In other words, these production conditions led to capsules that are relatively resistant to shear forces while being sensitive to low activation pressures.

Suitably, t1, t2 and t3 together add up to at least approximately 4 hours. The periods of time t3a and t3b together (t3) may suitably be at least approximately 3 hours. In particular, t3a may be at least approximately 90 minutes. Further, t3b may be at least approximately 2 hours.

As mentioned above, the use of relatively low temperatures T1 and particularly T2 during polycondensation and hardening of the capsules may lead to reduced cross-linking and slower polymerisation compared to known protocols for the generation of aminoplast microcapsules. The use of more gentle agitation conditions than are used for the generation of the appropriate size of droplets, during at least some of the polymerisation and hardening of the capsules may also reduce the speed of polycondensation. This slower, more exact bonding may lead to the formation of walls that have fewer holes, reducing the risk of leakage of the reactive material in the core. Further, the use of relatively low temperatures may reduce the risk of unwanted reactions between the core reactive material and any components in the composition. Finally, these reduced temperatures may reduce thermal expansion of the core material, thereby reducing the strain on the capsule walls and resulting in capsules with good structural integrity despite having very thin walls. Further, the use of gentle agitation conditions during steps 240 to 260, for example by using a different stirrer compared to the preceding steps leading to formation of the emulsion, may advantageously minimise the risk of damaging the relatively fragile microcapsules.

At the end of step 260, fully polymerised and hardened capsules may be present in the solution, which therefore forms a microcapsule slurry. At step 270, the polymerisation process may be finished by adding a formaldehyde scavenger such as urea and cooling down the slurry to room temperature, either actively or passively. Suitably, the formaldehyde scavenger may be added as an aqueous solution. When urea is used, an amount of between about 50 and 80% by weight, between about 65% and about 75% by weight, preferably between about 68% and about 72%, such as about 70% by weight relative to the amount of aminoplast precursor used at step 200 may be used.
The slurry may optionally be filtered to remove any debris, abnormally large microcapsules, etc. Suitably, a mesh sieve having a filtering cut-off between 200 µm and 400 µm may be used. Further, one or more additives may be added to the slurry to modifying its viscosity, stability, mixing properties etc. In embodiments, the slurry may be at least partially evaporated. For example, the microcapsules may be dried to obtain a powder.

The microcapsules disclosed herein may be suitable for preparing a variety of compositions, in particular, compositions comprising the microcapsules described herein and a matrix. The matrix may itself be inert, or it may comprise the external reactive material that can react with the reactive material in the microcapsules when released.

For example, the microcapsules described herein may advantageously be used as a means to separate two components of an adhesive composition. Suitably, the adhesive composition is a pressure sensitive adhesive composition. In such embodiments, when sufficient pressure is applied on the adhesive composition, the microcapsules break and release the core material. As the core material is preferably liquid, the released core material is able to flow and mix with components of the matrix. Reaction between the reactive core material and the external reactive material in the matrix enables the composition to cure into a resilient bond. Preferably, the pressure sensitive adhesive composition has a low activation pressure, such as e.g. an activation pressure that can easily and conveniently be applied by hand.

Two-component adhesives based on e.g. epoxy resins are commonly used in a variety of applications. However, such two components adhesives that are provided as a single composition are particularly difficult to make, in parts due to the difficulties associated with stably providing large amounts of unreacted highly reactive materials such as epoxy resins within a composition comprising a hardener. This is particularly difficult where a highly reactive material like an epoxy resin is to be encapsulated such that it can be released by application of relatively low pressures, as the requirements for stability during manufacture, mixing and storage are typically opposite to the requirements for low pressure activation forces. The inventors have surprisingly discovered that the microcapsules and methods of the invention enable a balance between these requirements to obtain a high-performance pressure-sensitive adhesive.

Suitably, the cores of the microcapsules may comprise an epoxy resin as a core reactive material, and an external reactive material may be provided in the matrix, the external reactive material acting as a hardener. Preferably, the hardener is an amine hardener.

In convenient embodiments, the core reactive material in the microcapsules and the external reactive material in the matrix are present in stoichiometric amounts. The composition may further comprise a rheology additive or thickener. Thickeners may advantageously restrict the movement of microparticles in the composition, which may otherwise alter the activation pressure required to break the microcapsules. Suitably, the thickener may be hydrophilic. In convenient embodiments, the thickener is a solid. Preferably, the thickener is inert and/or inorganic. Preferably, the thickener exhibits thixotropic properties. The thickener may be a fine powder, for example a fused silicate powder.

In other examples, the microcapsules described herein may advantageously be used as a means to separate two components of a self-healing coating composition. For example, healing agents such as dicyclopentadiene may advantageously be encapsulated according to the invention. The microcapsules described herein may advantageously be used to encapsulate a pigment. Such microcapsules may advantageously indicate the location of e.g. a micro-crack in a material, for example a helmet.

The invention will not be illustrated using the following non-limiting examples.

### Examples

### Example 1 Method of making microcapsules

In this example, the inventors prepared microcapsules according to embodiments of the invention where an epoxy resin is encapsulated. The size, integrity and ability to release reactive materials under pressure was evaluated for these microcapsules.

A first sample of microcapsules (Sample A) was prepared in a 1000ml glass beaker placed in an oil bath with heating function, and equipped with an ex-centred stirring mechanism. Water evaporation during the process was controlled by covering the beaker with aluminium foil. Table 1 below shows the ingredients that were used to prepare the microcapsules of Sample A. All weights in the table below are provided based on the products as obtained (off the shelf), including any solvents (e.g. 20 to 40% by weight, typically about 30% by weight, of water in the case of Luracoll SD). Corresponding amounts of dry reagents are provided between brackets.

**Table 1. Ingredients used for the preparation of the microcapsules of Sample A**

| **Ingredient** | **Amount (g)** | **%wt of total suspension** |
|---|---|---|
| Wall material - Luracoll SD | 12.8 (8.54) | 2.80 |
| Stabiliser / protective colloid - Lupasol PA140 | 21.0(4.2) | 4.59 |
| Core material - Epoxide resin Epinal KR 44.47 | 192.5 | 42.07 |
| Melamine (1,3,5-triazin-2,4,6-triamine) | 14.7 (3.97) | 3.21 |
| Formaldehyde scavenger - Urea | 26.0 (6.0) | 5.68 |
| Catalyst - Formic acid | 2.6 (0.26) | 0.57 |
| Continuous phase - DI-Water (in total) | 188 | 41.08 |
| Total | 457.6 | 100 |

The wall material used in this example is a melamine formaldehyde pre-condensate commercially available as Luracoll SD (from BASF) comprising 1,3,5-Triazin-2,4,6-triamin as a methylated polymer with formaldehyde. The commercial formulation used (Luracoll SD) comprised between 60 and 80% by weight (typically about 70%) of the pre-condensate by weight, in water.

The stabiliser / protective colloid used in this example is a polymer based on acrylamidosulfonate, commercially available as Lupasol PA 140 (from BASF). The commercial formulation used comprised about 20% by weight of solid content, in water.

In the finished microcapsule, the wall material comprises the melamine formaldehyde precondensate, the melamine, some of the stabiliser and some of the urea.

The core material used in this example is an epoxy resin commercially available as Epinal KR 44.47 from bto-epoxy GmbH. The commercial composition used comprised the following components: bisphenol A (BPA, also known as 4,4'-lsopropylidenediphenol) in an amount of between about 45% by weight and about 65% by weight, bisphenol F (BPF, also known as 4,4'-dihydroxydiphenylmethane) in an amount of between about 10% by weight and about 30% by weight, and 2,2'-[hexane-1,6-diylbis(oxymethylene)] dioxirane (also known as hexanediol diglycydyl ether) in an amount of between about 5% by weight and about 25% by weight. BPA and BPF are epoxy resin precursors and hexanediol diglycydyl ether is an epoxide containing reactive diluent.

The following process steps were followed:
1. Luracoll SD and Lupasol PA140 were dissolved in 150g of deionised water (DI-water) in the beaker.
2. The epoxy resin was added to the solution under agitation with a dissolver disk stirrer at 1100 rpm, and maintained under these agitations conditions for about 5 minutes in order to form a pre-emulsion.
3. When the pre-emulsion was homogeneous, formic acid was added to the mixture so as to adjust the pH to between 3 and 4, in order to start the condensation reaction, under the same agitation conditions (1100 rpm), at 30 °C.
4. The mixture was maintained at 30 °C under agitation with a dissolver stirrer at 1100 rpm until the desired droplet size is reached, in this case for 40 minutes.
5. The dissolver stirrer was exchanged for a helical stirrer and the emulsion was stirred gently (about 200 to 400 rpm) for another 30 minutes at 30 °C.
6. 38 g of DI-water was added to the dispersion, which was heated to 60 °C and maintained at this temperature with the same agitation conditions as in step 5, for 30 minutes.
7. A melamine suspension comprising 27% melamine in acidified DI-water (3.97 g of melamine and 10.73 g DI-water and formic acid to pH 4.5) was added to the microcapsule dispersion at a constant rate over 90 minutes, with the same agitation conditions as in steps 5 and 6, and a temperature of 60 °C.
8. The dispersion was maintained in the same temperature and agitation conditions as in step 7 for 2 hours.
9. A solution of urea in DI-water (6.0 g urea, 20 g DI-water) was added to the dispersion, and the dispersion was allowed to cool to room temperature (20-25 °C) passively, under gentle agitation conditions (e.g. about 200-400 rpm).
10. When the solution reached room temperature, the solution was filtered through a 400µm mesh sieve, in order to remove debris and abnormally large capsules or aggregates. Less than 1 wt% of the total solution was removed through this process.

As can be seen from the proportions in Table 1, the epoxy resin represented about 45% by weight of the total weight of the suspension, and another approx. 50% by weight of the suspension was water. Therefore, the process applied successfully resulted in encapsulation of very high loadings of epoxy resin. In particular, the content of core material in the microcapsules, relative to the total weight of the microcapsules was calculated at 89.3%. Due to the nature of the core material used, between 55% and 95% by weight of this core material is BPA/BPF, i.e. highly reactive epoxy resin precursors.

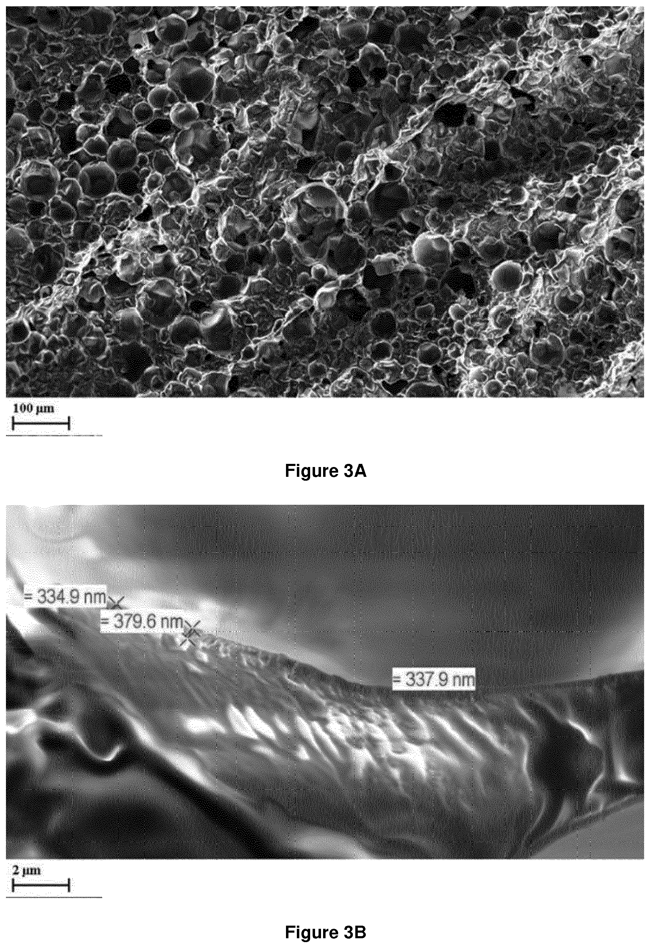

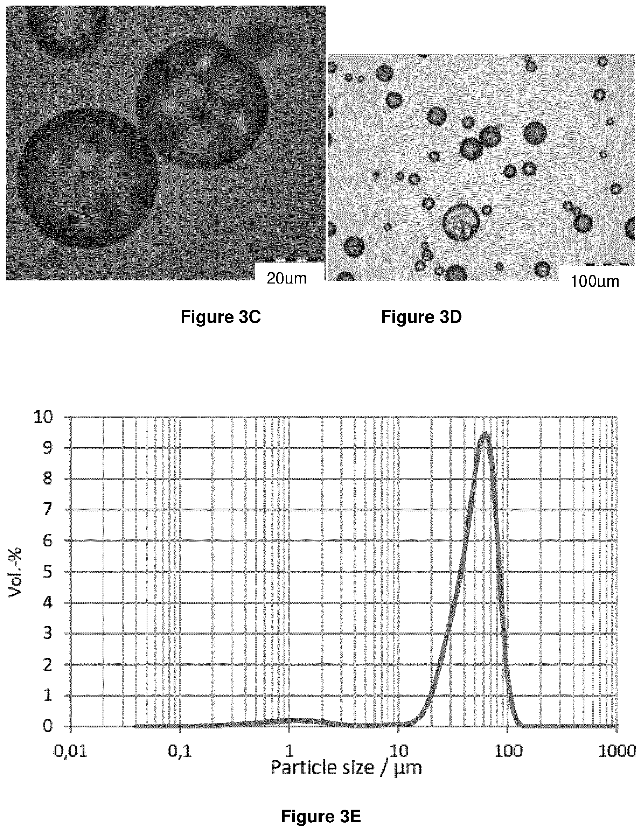

Figure 3A shows a microscope image of the resulting microcapsules obtained by scanning electron microscope. Figure 3B shows a cross section through a capsule in the sample shown on Figure 3A. Figures 3C and 3D shos microscope images of microcapsules of this sample (Sample A), where the scale bar indicates 20 µm on Figure 3C and 100 µm on Figure 3D. Figure 3E shows a size distribution measured for the microcapsules of Sample A. In particular, in order to obtain the images on Figures 3A and 3B, samples of capsules were frozen in liquid nitrogen then sand paper was used to open some capsules and gold/palladium was sputtered on the sample for 3 minutes. As can be seen on Figure 3A, Figure 3C-D and Figure 3E, capsules with an average size of 60 µm and excellent structural integrity were obtained. As can be seen on Figure 3B, the capsules according to embodiments of the invention have regular walls with a thickness of about 300-400 nm. In particular, the wall thickness was measured for N≥10 capsules, and the following measurements were obtained: average = 378 nm, standard deviation = 102 nm, minimum = 185 nm, maximum = 553 nm. Without wishing to be bound by theory, it is believed that the large standard deviation may be due at least in part to variations in the angles of fracture of the microcapsules (where the plane of fracture through some microcapsules may not be perpendicular to the surface of the microcapsules, leading to an overestimation of the thickness of the wall).

A second sample of microcapsules (Sample B) was prepared in a 5000 ml reactor equipped with an automatic centrical stirring system (Reactor Ready™ Process Vessel) in a borosilicate glass 5l beaker enclosed in a double jacketed reactor wall connected with a thermostat with heating and active cooling functions. Water loss during the process was controlled using a sealed cover with a small hole for pressure equilibrium. Table 2 below shows the ingredients that were used to prepare the microcapsules of Sample B. As above, all weights in Table 2 below are provided based on the products as obtained (off the shelf), including any solvents. Corresponding amounts of dry reagents are provided between brackets.

**Table 2. Ingredients used for the preparation of the microcapsules of Sample B**

| **Ingredient** | **Amount (g)** | **%wt of total suspension** |
|---|---|---|
| Wall material - melamine formaldehyde pre-condensate (Luracoll SD) | 76.5 (51.26) | 2.80 |
| Stabiliser / protective colloid - acrylic copolymer with sulfonate groups (Lupasol PA140) concentration between 60 and 80 weight% in water | 126.0 (25.20) | 4.59 |
| Core material - Epoxy resin (mixture of BPA and BPF with epoxide containing solvant) | 1155.0 | 42.07 |
| Melamine (1,3,5-triazin-2,4,6-triamine) | 88.2 (24.14) | 3.21 |
| Formaldehyde scavenger - Urea | 156.0 (36.00) | 5.68 |
| Catalyst - Formic acid | 15.6 (2.22) | 0.57 |
| Continuous phase - DI-Water (in total) | 1128.0 | 41.08 |
| Total | 2745.3 | 100 |

The core material used for this sample was the same as for Sample A, as were the other reagents.

The following process steps were followed:
1. Luracoll SD and Lupasol PA140 were dissolved in 900g of DI-water in a 2l glass beaker, and the solution was transferred to the stirred reactor when the solution was clear.
2. The epoxy resin was added to the solution under agitation with a turbine (pitched blade) stirring shaft (made of PTFE) at 650 rpm, and maintained under these agitations conditions for about 5 minutes in order to form a pre-emulsion.
3. When the pre-emulsion was homogeneous, formic acid was added to the mixture so as to adjust the pH to between 3 and 4, in order to start the polymerisation, under the same agitation conditions, at 30 °C.
4. The mixture was maintained at 30 °C under the same agitation conditions as in steps 2 and 3 until the desired droplet size is reached, about 40 minutes in this case.
5. The turbine stirrer was exchanged for an anchor stirrer (also made of PTFE) and the emulsion was stirred for another 30 minutes at 30 °C at 250 rpm.
6. 228g of DI-water was added to the dispersion, which was heated to 60 °C and maintained at this temperature with the same agitation conditions as in step 5, for 30 minutes.
7. A melamine suspension comprising 27% melamine in acidified DI-water (24.14 g of melamine and 65.26g DI-water and formic acid to pH 4.5) was added to the microcapsule dispersion at a constant rate over 90 minutes, with the same agitation conditions as in steps 5 and 6, and a temperature of 60 °C.
8. The dispersion was maintained in the same temperature and agitation conditions as in step 7 for 2 hours.
9. A solution of urea in DI-water (36 g urea, 120 g DI-water; i.e. an aqueous solution of urea at a concentration of 23% by weight) was added to the dispersion, and the dispersion was actively cooled to room temperature (20-25 °C) at a rate of approximately 0.9 °C / minute, under gentle agitation (approx. 250 rpm).
10. When the solution reached room temperature, the solution was filtered through a 400µm mesh sieve, in order to remove debris and abnormally large capsules or aggregates. Less than 1 wt% of the total solution was removed through this process.

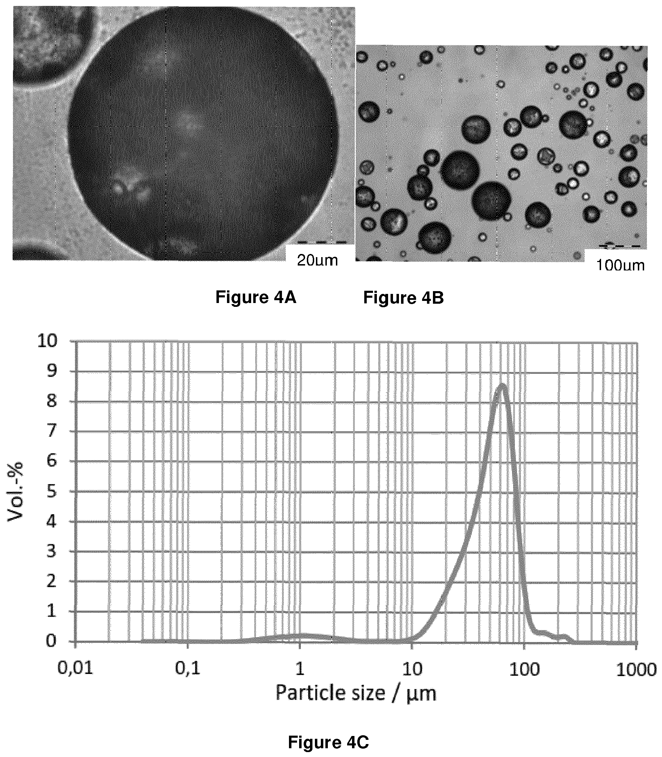

The morphology of the resulting capsules was analysed to verify the quality and integrity of the capsules, which were similar to Sample A. Figure 4A and 4B show microscope images of the capsules of sample B (where the scale bar shows 20 µm on Figure 4A and 100 µm on Figure 4B), showing that the capsules have good integrity and a similar morphology as the capsules of Sample A as shown on figure 3C. In particular, the particle size of the capsules of both Sample A and Sample B were measured using a laser diffraction method (with a particle size analyser from Beckmann Coulter, LS13320) using both the Fraunhofer and Mie models. The results of these analyses can be seen on Figure 3D for Sample A and Figure 4C for sample B. For both Sample A and Sample B, the peak maximum particle size was measured as about 55-65 µm. Further, the solid content of the microcapsule slurry of Samples A and B was measured using a SMART 5 Microwave Moisture analyser from CEM (using max. 50% power, max 40 °C). Both samples had a solid content of about 45±1 % by weight. The viscosity of the microcapsule slurry was measured using a Brookfield Viscometer (Model DV-II + using settings #2 100 rpm and #2 100 rpm). For both samples, the viscosity was measured as below 1000 mPas prior to addition of any further additives.

### Example 2 Method of making adhesive composition

In this example, the inventors tested whether the microcapsules of Sample A could be used to provide a pressure activatable two-component adhesive.

5g of microcapsules from Sample A above were added to a mixing vessel (Speedmixer®) together with 0.06 g of a dispersing agent (polyetherphosphate, commercially available as Tego Dispers 656 from Evonik). The components were mixed at 800 -1000 rpm for two rounds of 2 minutes. The mixture was then allowed to sit for 2 hours in order to enable the dispersing agent to adsorb on the microcapsules.

0.37g of a rheology additive (dispersion of synthetic layered silicate with a dispersing agent, in water - commercially available as Laponite SL25 from BYK) was added and mixed with the rest of the components for one minute at 800 -1000 rpm. 0.7g of an epoxy curing agent (also referred to as hardener, commercially available as Cardolite UltraLite 2009 SF®) was added and mixed at 800 -1000 rpm for 4 minutes.

Separately, 36g of a fused silica powder comprising SiO₂ particles below 10µm (available commercially as Amosil® FW600) was added together with 7.2g of a dispersing agent (high molecular weight block copolymer with pigment affinic groups, commercially available as DISPERBYK-90) and 16.8g DI-water in a mixing vessel (Speedmixer®). The components were mixed for 2 minutes at 2000 rpm and a further minute at 3000 rpm.

1.53g of the silica dispersion was added to the microcapsules and hardener solution, and the resulting composition was mixed at a stirring speed of between 800 and 1000rpm for one minute.

The composition was applied to a set of test substrates (metallic cylinders having a diameter of approximately 1cm) as a layer of approx. 1 mm, and allowed to dry for 1 day. The test substrates were then adhered to a corresponding metallic surface by applying a calibrated of 4N/mm². The bond was allowed to cure for 7 days then the tensile strength of the bond was tested using a subset of the bonded substrates. A tensile strength of 13.3 N/mm² ± 2.53 N/mm² was measured. Some of the bonded substrates were subject to a climate stress test by placing them in an atmosphere with 92% relative humidity and 55°C for 5 days. After this period, the tensile strength of the bond was tested. A tensile strength of 8.4 N/mm² ± 1.5 N/mm² was measured.

This data indicates that the microcapsules of the invention are able to stably encapsulate an epoxy resin and release it under low pressure, to form a strong bond indicating high loadings of reactive epoxides in the microcapsules.

### Example 3 Investigation of geometric parameters

In this example, the inventors generated melamine-formaldehyde capsules with an epoxy resin core with different parameters in order to investigate the relationship between the parameters of the geometry of the capsules (diameter, thickness of walls, core to wall ratio) on the performance of the capsules.

In particular, the same ingredients as in Table 1 were used to generate 5 different microcapsule samples (Samples C-G) depending on the relative amounts of ingredients and the process conditions.

All of these samples were prepared in a 1000ml glass beaker placed in an oil bath with heating function, and equipped with an ex-centred stirring mechanism. Water evaporation during the process was controlled by covering the beaker with aluminium foil. Table 3 below shows the ingredients that were used to prepare the microcapsules of Samples C to G. As above, all weights in Table 3 above are provided based on the products as obtained (off the shelf), including any solvents. Corresponding amounts of dry reagents are provided between brackets.

**Table 3. Ingredients used for the preparation of the microcapsules of Samples C to F**

| **Ingredient** | **Sample C Amount (g)** | **Sample C %wt** | **Sample D Amount (g)** | **Sample D %wt** | **Sample E Amount (g)** | **Sample E %wt** | **Sample F Amount (g)** | **Sample F %wt** |
|---|---|---|---|---|---|---|---|---|
| Luracoll SD | (8.54) 12.8 | 2.8 | (8.54) 12.8 | 2.8 | (5.7) 8.5 | 1.95 | (14.27) 21.3 | 4.21 |
| Lupasol PA140 | (4.2) 21.0 | 4.58 | (4.2) 21.0 | 4.58 | (2.8) 14.0 | 3.22 | 35.0 (7.0) | 6.92 |
| Epinal KR 44.47 | 192.5 | 42.1 | 192.5 | 44.41 | 192.5 | 44.30 | 192.5 | 38.08 |
| Melamine | (3.97) 14.7 | 3.2 | 14.7 (3.97) | 3.2 | (2.65) 9.8 | 2.25 | (6.6) 24.5 | 4.85 |
| Urea | (6.0) 26.0 | 5.7 | (6.0) 26.0 | 5.7 | (4.0) 20.0 | 4.6 | (10.0) 40.0 | 7.91 |
| Formic acid | (0.26) 2.6 | 0.57 | (0.26) 2.6 | 0.57 | 1.7 (0.18) | 0.39 | (0.43) 4.3 | 0.85 |
| DI-Water (in total) | 188 | 41.1 | 188 | 41.1 | 188.0 | 43.26 | 188 | 37.18 |
| Total | 457.6 | 100 | 457.6 | 100 | 434.5 | 100 | 505.6 | 100 |

In order to prepare the capsules of Sample C, the same process as for Sample A was used except that at step 4, the mixture was maintained at 30 °C under agitation with a dissolver stirrer at a higher speed (1400 rpm) than for Sample A (where a speed of 1100 rpm was used), and for a longer period of time (until the desired particle size was reached, i.e. about 20 minutes).

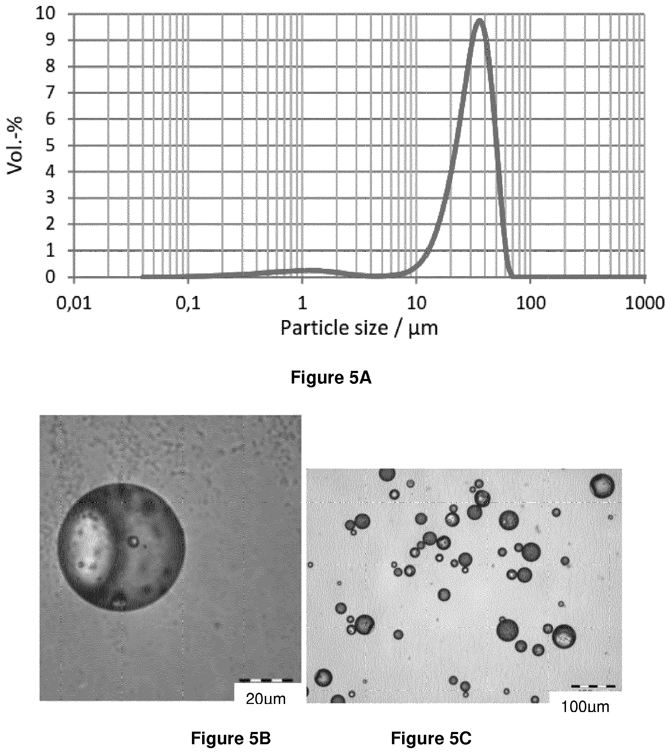

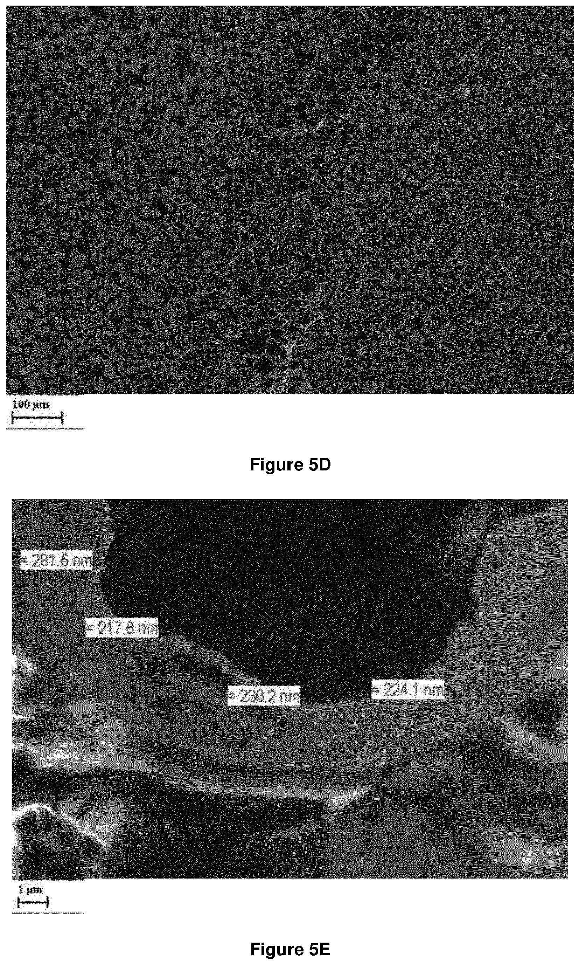

The particle size of the capsules of Sample C was measured as explained in Example 1. The results of this analysis can be seen on Figure 5A. The morphology of the capsules of sample C was assessed by obtaining microscope images of the capsules, as shown on Figures 5B and 5C. The peak maximum particle size was measured as about 40 µm (compared to 55-65 µm for Samples A and B). This confirms that the agitation conditions influences the size of the microcapsules obtained. Scanning electron microscope images were additionally obtained as explained in Example 1. Figure 5D shows the resulting scanning electron microscope image and Figure 5E shows a cross section through a capsule of the sample shown on Figure 5D. Using these images, the wall thickness of the capsules in this sample was measured for N≥10 capsules, and the following measurements were obtained: average = 295 nm, standard deviation = 74 nm, minimum = 150 nm, maximum = 502 nm. The content of core material in the microcapsules, relative to the total weight of the microcapsules was calculated at 89.3%.

In order to prepare the capsules of Sample D, the same process as for Sample A was used except that at step 4, the mixture was maintained at 30 °C under agitation with a dissolver stirrer at 1000 rpm for a shorter period of time (until the desired particle size was reached, i.e. about 20 minutes).

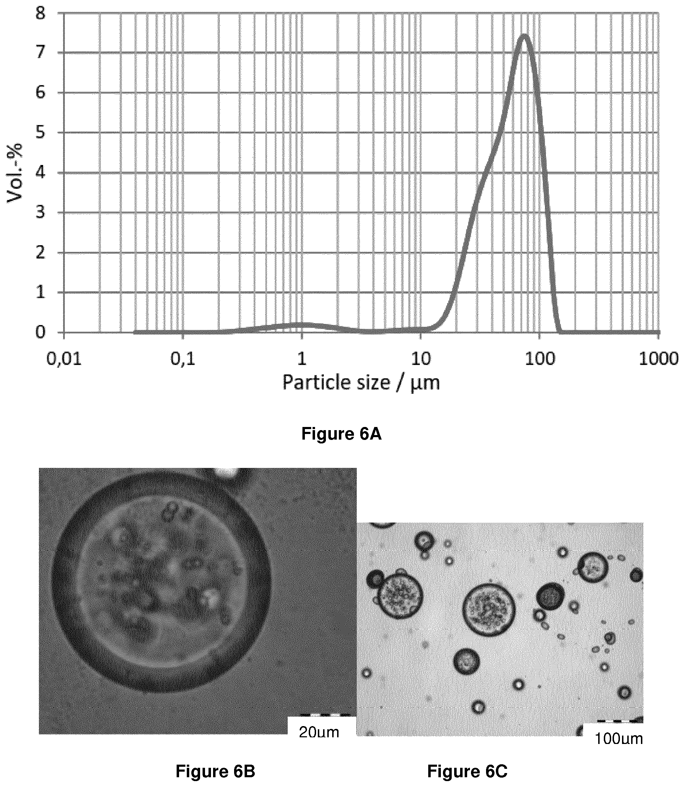

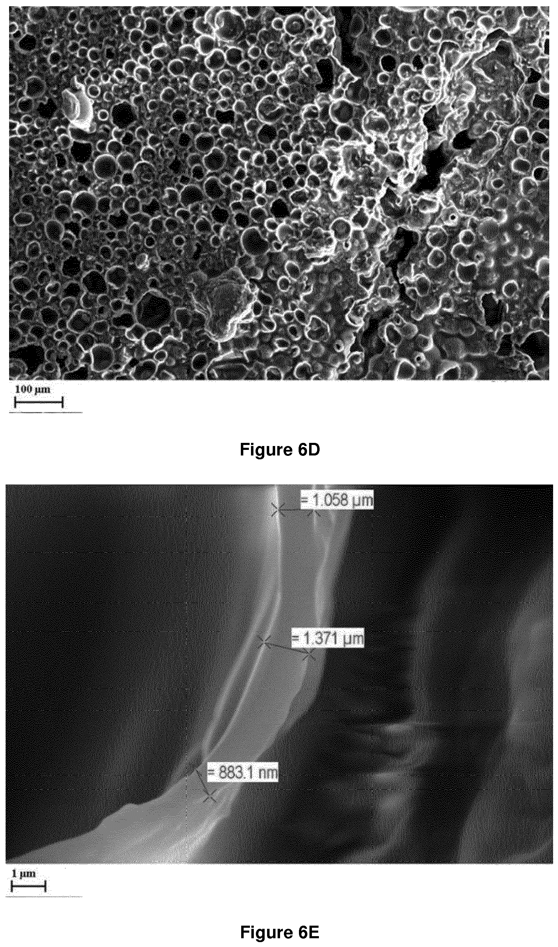

The particle size of the capsules of Sample D was measured as explained in Example 1. The results of this analysis can be seen on Figure 6A. The morphology of the capsules of sample D was assessed by obtaining microscope images of the capsules, as shown on Figures 6B and 6C. The peak maximum particle size was measured as about 80 µm (compared to 55-65 µm for Samples A and B). This confirms that the agitation conditions influences the size of the microcapsules obtained. Particles with diameters of about 80 µm and above are expected to be prone to breaking during handling and upscaling, thereby making them less advantageous. Scanning electron microscope images were additionally obtained as explained in Example 1. Figure 6D shows the resulting scanning electron microscope image and Figure 6E shows a cross section through a capsule of the sample shown on Figure 6D. Using these images, the wall thickness of the capsules in this sample was measured for N≥10 capsules, and the following measurements were obtained: average = 1041 nm, standard deviation = 399 nm, minimum = 285 nm, maximum = 1958 nm. The content of core material in the microcapsules, relative to the total weight of the microcapsules was calculated at 89.3%.

In order to prepare the capsules of Sample E, the same process as for Sample A was used except that at step 4, the mixture was maintained at 30 °C under agitation with a dissolver stirrer at a higher speed (about 1200 rpm) than for Sample A (where a speed of 1100 rpm was used), but for the same period of time. As can be seen by comparing the data in Table 3 and Table 1, the amount of wall building material was however lower in Sample E than in Sample A, resulting in capsules with thinner walls.

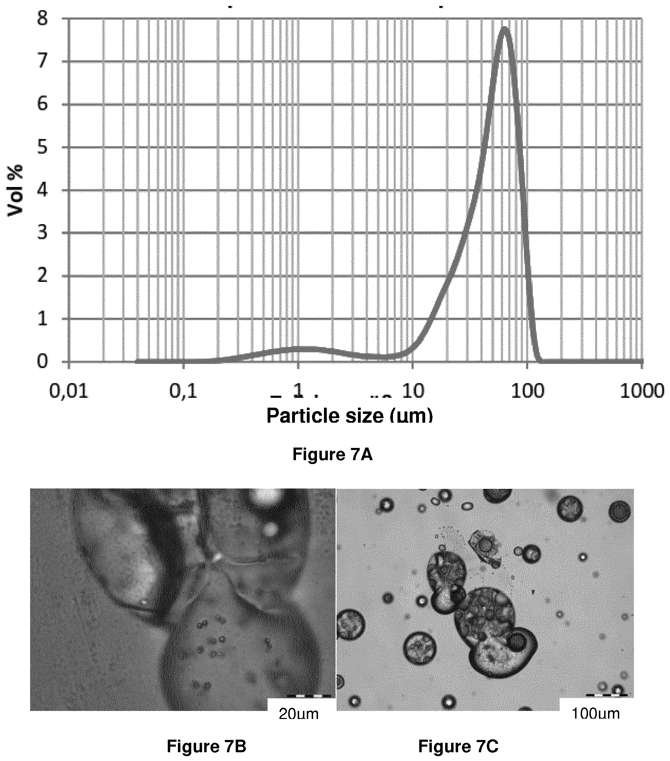

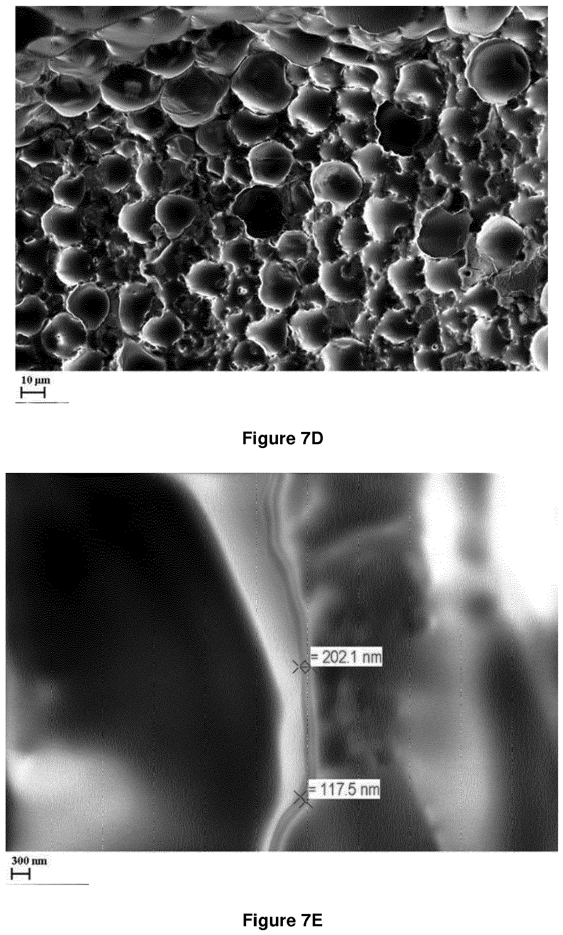

The particle size of the capsules of Sample E was measured as explained in Example 1. The results of this analysis can be seen on Figure 7A. The morphology of the capsules of sample E was assessed by obtaining microscope images of the capsules, as shown on Figure 7B. The peak maximum particle size was measured as about 60 µm (i.e. similar to the 55-65 µm measured for Samples A and B). However, the size distribution was broader than for Samples A-B, indicating that the use of lower amounts of wall material (leading to thinner walls) may lead to reproducibility problems particularly in upscaling. This may in turn have disadvantages in terms of the predictability of the activation force for these capsules. Further, as can be seen on Figures 7B-7C (and also Figure 7D, see below), the thinner walls led to a higher amount of burst capsules in the sample, compared to Samples A and B. Scanning electron microscope images were additionally obtained as explained in Example 1. Figure 7D shows the resulting scanning electron microscope image and Figure 7E shows a cross section through a capsule of the sample shown on Figure 7D. Using these images, the wall thickness of the capsules in this sample was measured for N≥10 capsules, and the following measurements were obtained: average = 198 nm, standard deviation = 74 nm, minimum = 102 nm, maximum = 322 nm. The content of core material in the microcapsules, relative to the total weight of the microcapsules was calculated at 92.3%.

In order to prepare the capsules of Sample F, the same process as for Sample A was used except that at step 4, the mixture was maintained at 30 °C under agitation with a dissolver stirrer at a slower speed (about 1000 rpm) than for Sample A (where a speed of 1100 rpm was used), but for a slightly shorter period of time (10 minutes less than in Sample A). The amount of wall building material was however higher in sample F than in Sample A, resulting in capsules with thicker walls.

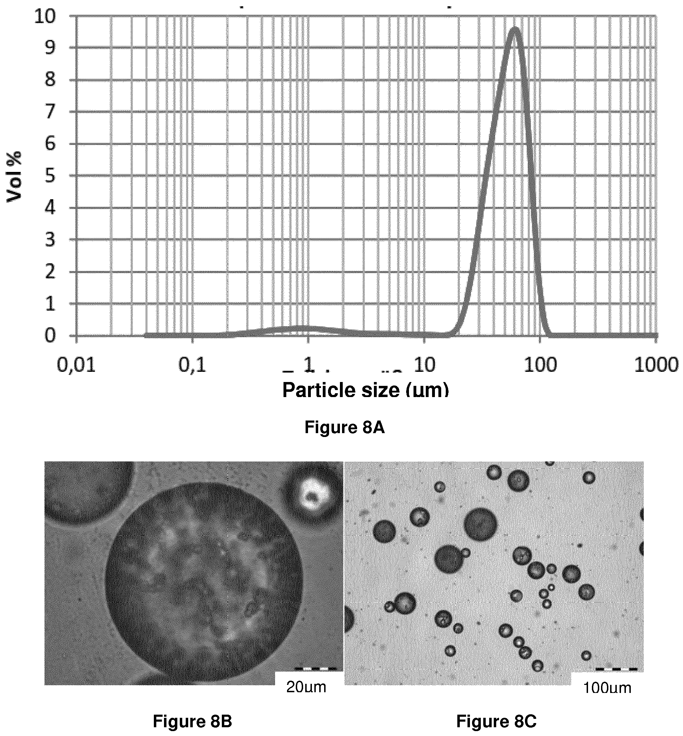

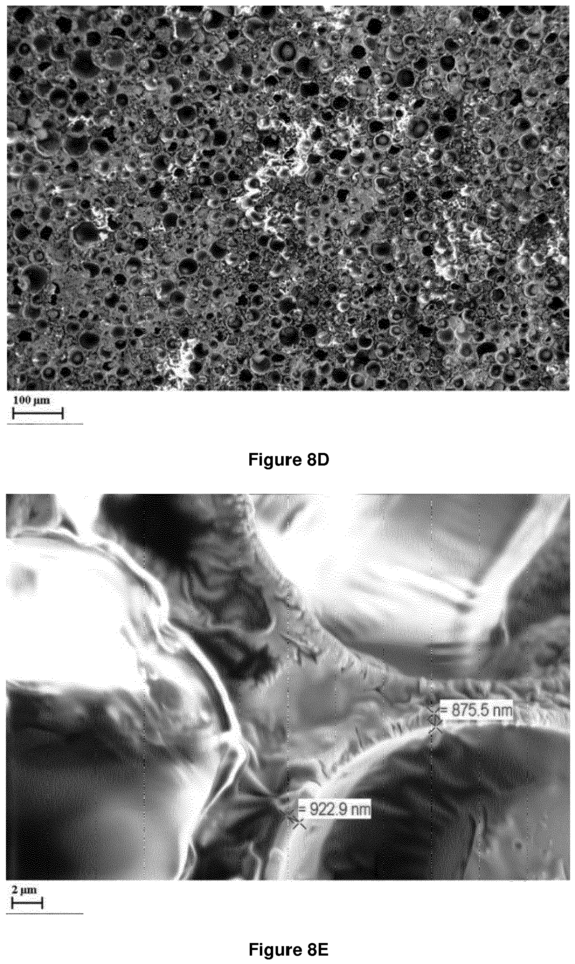

The particle size of the capsules of Sample F was measured as explained in Example 1. The results of this analysis can be seen on Figure 8A. The morphology of the capsules of sample F was assessed by obtaining microscope images of the capsules, as shown on Figures 8B-8C. The peak maximum particle size was measured as about 60 µm (i.e. similar to the 55-65 µm measured for Samples A and B). Scanning electron microscope images were additionally obtained as explained in Example 1. Figure 8D shows the resulting scanning electron microscope image and Figure 8E shows a cross section through a capsule of the sample shown on Figure 8D. Using these images, the wall thickness of the capsules in this sample was measured for N≥10 capsules, and the following measurements were obtained: average = 934 nm, standard deviation = 242 nm, minimum = 640 nm, maximum = 1524 nm. The content of core material in the microcapsules, relative to the total weight of the microcapsules was calculated at 83.2%.

Therefore, Samples E (Figures 7A-7D) and F (Figures 8A-8D) were obtained which contain the same ingredients as Samples A (Figures 3A-3D) and B (Figures 4A-4B) and have microcapsules with a similar size (peak max. about 60 µm), but which respectively have thinner (Sample E) and thicker (Sample F) walls than Samples A and B. By comparing the respective figures associated with these samples, it can be seen that the samples according to the invention (Samples A and B) have capsules with a very regular morphology and good structural integrity, with high loadings of core material, whereas the capsules that have the same size and thinner walls (Sample E) show breakage during the manufacturing process, and the capsules with thicker walls (Sample F) have lower loadings and likely require higher pressures to release the core materials.

Further, Samples C (Figures 5A-5E) and D (Figures 6A-6E) were obtained which contain the same ingredients as samples A (Figures 3A-3E) and B (Figures 4A-4C) in similar amounts (leading to overall similar amounts of wall and core material in the microcapsule slurry) but have microcapsules that respectively have smaller (Sample C, peak max. 40 µm) and larger (Sample D, peak max. 80 µm) sizes than Samples A and B (peak max. 55-65 µm). As can be seen by comparing the respective figures associated with these samples, the capsules of comparative sample D had significantly thicker walls than the capsules of Samples A, B and C according to the invention. The combination of larger sizes and thicker walls is expected to result in microcapsules that have higher variability of breaking pressures, which may be disadvantageous in many circumstances.

### Example 4 Acrylate-containing microcapsules

In this example, the inventors prepared microcapsules according to embodiments of the invention where an acrylate resin is encapsulated as the reactive core material. The size, integrity and ability to release reactive materials under pressure was evaluated for these microcapsules.

A sample of microcapsules (Sample G) was prepared in a 1000ml glass beaker placed in an oil bath with heating function, and equipped with an ex-centred stirring mechanism. Water evaporation during the process was controlled by covering the beaker with aluminium foil. Table 4 below shows the ingredients that were used to prepare the microcapsules of Sample G.

**Table 4. Ingredients used for the preparation of the microcapsules of Sample G**

| **Ingredient** | **Amount (g)** | **%wt of total suspension** |
|---|---|---|
| Wall material - Luracoll SD | (8.54) 12.8 | 2.80 |
| Stabiliser / protective colloid - Lupasol PA140 | (4.2) 21.0 | 4.58 |
| Core material - acrylate | 192.5 | 42.08 |
| Melamine (1,3,5-triazin-2,4,6-triamine) | (3.97) 14.7 | 3.21 |
| Formaldehyde scavenger - Urea | (6.0) 26.0 | 5.68 |
| Catalyst - Formic acid | (0.26) 2.6 | 0.57 |
| Continuous phase - DI-Water (in total) | 188 | 41.08 |
| Total | 457.6 | 100 |

As above, all weights in Table 4 above are provided based on the products as obtained (off the shelf), including any solvents. Corresponding amounts of dry reagents are provided between brackets.

All of the materials used for this sample were the same as for Sample A, except the core reagent, which was replaced with an acrylate resin, in particular a highly reactive triacrylate monomer in an inert solvent.

In order to prepare the capsules of Sample G, the same process as for Sample A was used except that at steps 2 and 4, the solution was agitated for a slightly shorter period of time (20 minutes less) than for sample A.

The particle size of the capsules of Sample G was measured as explained in Example 1. The peak maximum particle size was measured as about 60 µm (i.e. similar to the 55-65 µm measured for Samples A and B).

## Claims

1. A microcapsule comprising a core material and a wall that encloses the core material, wherein:
the core material comprises a hydrophobic material;
the walls comprise an aminoplast polymer;
the microcapsules have an average diameter between 30 and 60 µm; and
the microcapsules comprise at least 85% by weight of core material.

2. The microcapsule according to Claim 1, wherein the core material comprises a reactive material, preferably wherein the core material does not comprise a non-reactive solvent.

3. The microcapsule according to Claim 1 or Claim 2, wherein the reactive material comprises one or more active monomers or oligomers that can react to form an adhesive.

4. The microcapsule according to any preceding claim, wherein the reactive material comprises an epoxy resin, an acrylate resin, a peroxyde radical initiator or isocyanate, preferably wherein the reactive material comprises an epoxy resin.

5. The microcapsule according to any preceding claim, wherein the core material has a viscosity between 1 and 5000 mPas at 25 °C, preferably wherein the reactive material has a viscosity between 300 and 2000 mPas at 25 °C.

6. The microcapsule of any preceding claim, wherein the walls comprise melamine formaldehyde.

7. The microcapsule of any preceding claim, wherein the walls of the microcapsules have an average thickness between approximately 50 nm and approximately 2000 nm, between approximately 50 nm and approximately 1500 nm, between approximately 200 nm and approximately 500 nm, or between approximately 200 nm and approximately 400 nm.

8. The microcapsule of any preceding claim, wherein the microcapsules can be broken by application of a pressure above approximately 1 N/mm² and below approximately 20 N/mm², below approximately 15 N/mm², below approximately 10 N/mm², below approximately 5 N/ mm², or at approximately 4 N/mm².

9. A microcapsule slurry comprising the microcapsule of any of Claims 1 to 8 suspended in a liquid, optionally further comprising one or more additives selected from: formaldehyde scavengers, viscosity additives, and stabilisers, preferably wherein the formaldehyde scavenger is selected from melamine and/or urea.

10. A method of making a microcapsule slurry, the method comprising:
providing an aqueous solution comprising an aminoplast polymer precursor;
adding a hydrophobic core material, optionally comprising a reactive material, to the aqueous solution and forming a pre-emulsion in agitation conditions such that droplets are formed having an average diameter of between 30 and 60 µm;
bringing the pH of the solution to between 3 and 4, optionally between 3.5 and 3.8, to start polymerisation of the aminoplast polymer precursor;
maintaining the agitation conditions for a period of time t1, at a temperature T1;
changing the agitation conditions to reduce the shear force and maintaining these conditions for a period of time t2;
increasing the temperature to a temperature T2 and maintaining this temperature for a period of time t3, while adding a formaldehyde scavenger for at least part of the period t3,
wherein temperature T1 is below 40 °C, temperature T2 is between 45 and 70 °C, the periods of time t1, t2 and t3 together add up to at least 4 hours.

11. The method of Claim 10, wherein the aqueous solution comprising an aminoplast polymer precursor additionally comprises a negatively charged stabiliser colloid.

12. The method of Claim 10 or Claim 11, wherein t1 is between 5 and 60 minutes, and/or wherein t2 is between 20 and 60 minutes, t3 is at least 3 hours.

13. The method of any of Claims 10 to 12, wherein the formaldehyde scavenger comprises melamine and/or urea.

14. The method of any of Claims 10 to 13, wherein the core material is added as a liquid that has a viscosity between 1 and 5000 mPas at 25 C, preferably wherein the reactive material has a viscosity between 300 and 2000 mPas at 25 C.

15. A composition comprising:
the microcapsule of Claim 2, or any of Claims 3 to 9 when dependent on Claim 2; and
a matrix, optionally wherein the matrix comprises a further reactive material that can react with the reactive material in the microcapsules.
